# EUROPEAN PATENT APPLICATION

(11) **EP 4 488 960 A1**
(43) Date of publication of application: **08.01.2025**
(21) Application number: 23183383.1
(22) Date of filing: 04.07.2023
(51) Int. Cl.: G06V 20/59

(54) **METHOD FOR DETECTING A PERSON USING A CONSOLE**

(71) Applicant: Valeo Comfort and Driving Assistance, 94000 Créteil (FR)
(72) Inventor: ELFAKHARANY, Ahmed, 94000 Créteil (FR); SAAD-HASANAIN, Mohamed, 94000 Créteil (FR)
(74) Representative: Delplanque, Arnaud

(57) **Abstract**

The proposed invention concerns a method for detecting a person using a console (1), in particular for safety features activation in a vehicle, the method comprising the following steps:
• Providing a camera (2) configured to take images of the person, in particular the camera is an Interior Monitoring System (IMS) camera of a vehicle,
• Detecting an interaction, in particular a touch, of a person on the console (1),
• Detecting key points on the images, said key points (Kn) being located on the person's body,
• Using key points (Kn) detected on the images to determine if the person is using the console by determining the distance between the key point (Kn) and a reference point -RP) on the console (1).

## Description

The field of the present invention is that of a method for detecting a person using a console.

Currently, new vehicles come out with a center console that are equipped with safety features that assist drivers in avoiding distractions while operating a vehicle. Safety features may involve disabling certain applications, such as games, while the vehicle is in motion. In another example, only voice commands, without the use of a keyboard, can be utilized while the vehicle is in motion. Safety features may involve disabling the console for a brief period after a few touches on the console while the vehicle is in motion. These safety features are crucial when the driver attempts to operate the console while driving. However, they can become frustrating if the front passenger (not driving) is the one using the console while the vehicle is in motion. The present invention aims to solve this problem.

For this purpose, the invention proposes a method for detecting a person using a console, in particular for safety features activation in a vehicle, the method comprising the following steps:
- Providing a camera configured to take images of the person, in particular the camera is an Interior Monitoring System (IMS) camera of a vehicle,
- Detecting an interaction, in particular a touch, of a person on the console,
- Detecting key points on the images, said key points being located on the person's body,
- Using key points detected on the images to determine if the person is using the console by determining the distance between the key point and a reference point on the console.

The invention involves using a camera capable of distinguishing whether the driver or the passenger is utilizing the console. If the driver is detected as attempting to use the console, then a console safety feature is activated. On the contrary, if the passenger (not driving) is detected, then no safety feature is activated. For the driver, for instance, applications are locked during driving and become accessible when the car is stationary. The invention enables to differentiate between the two persons (driver and passage). Overall safety is thereby enhanced.

According to one aspect of the invention, the camera is configured to capture both a passenger and a driver in its field of view.

According to one aspect of the invention, key points are detected for both the driver and the passenger.

According to one aspect of the invention, the camera is capable of operating in the visible spectrum.

According to one aspect of the invention, key points are located at least on the arm and/or the shoulder of the person.

According to one aspect of the invention, key points are located on the elbow and wrist of each person, for right arm and left arm.

According to one aspect of the invention, the method comprises the step of determining the distance between the key point on the wrist and the reference point on the console.

According to one aspect of the invention, the method comprises the step of:
- determining the distance between the key point and the reference point on the console and determining an estimated direction (or ray) aligned with some of the key points.

According to one aspect of the invention, the step of detecting an interaction, in particular a touch, of a person on the console involves a touch detection on the console.

According to one aspect of the invention, the console comprises a touchscreen or a touch-sensitive interface.

According to one aspect of the invention, the reference point on the console is at a center point of the console.

According to one aspect of the invention, the method comprises the following steps:
- Determining, based on the image, the distance between a key point of a person, particularly a key point on the wrist, and the reference point on the console.
- Determining, based on the image, the distance between the reference point on the console and the intersection point of a forearm direction of the person with a console reference line.

If a driver has his hand is in a console surrounding area but the arm is not directed towards the console, for instance the arm is parallel to the console, then the method concludes that the driver is not using the console.

According to one aspect of the invention, the reference line on the console is a horizontal line aligned with one side of the console.

According to one aspect of the invention, the method comprises the step of determining whether the person is using the console based on these distances.

According to one aspect of the invention, the method comprises the step of calculating the sum of said distances L2=dist12 + dist22 (or L1=dist11+dist21)
Where value L1 is related to the right forearm, and value L2 to the left forearm.

According to one aspect of the invention, the method comprises the step of determining the minimum of L1 and L2 equal to min(L1, L2).

According to one aspect of the invention, the method comprises the step of, based on the parameter min(L1+L2) related to each person, determining the person who is the closest to the console.

According to one aspect of the invention, the method comprises the step of, if the parameter min(L1+L2) is inferior to a predetermined threshold, determine if the person associated to this parameter is the driver on not.

If yes (the detected person is the driver), activate at least on safety feature for the console.

If no (the detected person is not the driver), do not activate at least on safety feature for the console.

The method comprises the step of detecting a bounding box at least for the driver.

According to one aspect of the invention, the method comprises the step of, if the key point is in the bounding box of the driver, then provide an information that the driver is attempting to use the console.

The invention also relates to a detection device for detecting a person using a console, in particular for safety features activation in a vehicle, the detection device is configured to perform the detection method as described above, wherein the detection device comprises a camera and a processing unit, in particular an onboard computer, connected to the camera.

The invention also pertains to a vehicle equipped with the aforementioned detection device.

Further features, details and advantages of the invention will become more clearly apparent from reading the description given below by way of indication with reference to the drawings, in which:

[Fig 1] is a block diagram representing the method according to an embodiment of the invention,

[Fig. 2] is a schematic view of the detection device according to an embodiment of the invention to perform the method of figure 1, in a first situation,

[Fig. 3] is a schematic view of the detection device according to an embodiment of the invention to perform the method of figure 1, in a second situation,

[Fig. 4] is a schematic view of the detection device according to an embodiment of the invention to perform the method of figure 1, in a third situation.

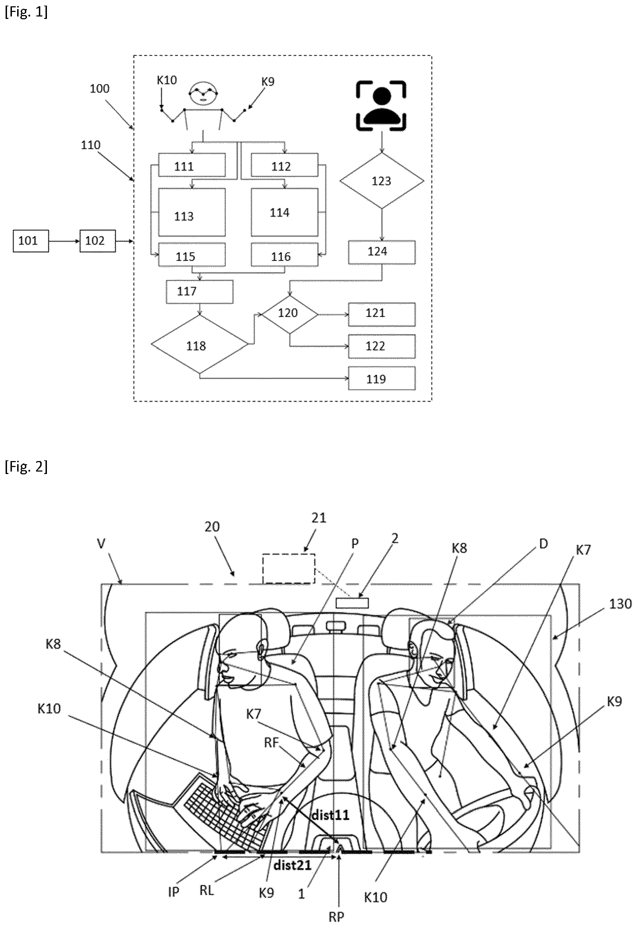

Figure 1 is a schematic diagram of the method 100 for detecting a person using a console 1, for safety features activation in a vehicle V. The console 1 comprises a touchscreen or a touch-sensitive interface.

In the following description, two persons are present in the vehicle, namely a driver referred to as D, and a passenger referred to as P (see figures 2, 3 and 4).

The method 100 comprises the following steps:
- Providing a camera 2 configured to take images of the persons D, P, the camera being an Interior Monitoring System (IMS) camera of the vehicle V,
- Detecting an interaction, in particular a touch, of a person D, P on the console 1 (step 101),
- Detecting key points Kn on the images, said key points Kn being located on the person's body (step 102),
- Using key points Kn detected on the images to determine if the person is using the console (the successive steps are represented in figure 1 in block 110).

The camera 2 belongs to a detection device 20 that comprises a processing unit 21, in particular an onboard computer, connected to the camera 2.

The camera 2 is configured to capture both a passenger P and a driver D in its field of view, and key points Kn (including K7, K8, K9, K10) are detected for both the driver D and the passenger P.

The camera 2 is capable of operating in the visible spectrum.

Key points are located on the elbow (elbow K8 for right arm, and elbow K7 for left arm) and wrist (wrist K10 for right arm, and elbow K9 for left arm) of each person, for right arm and left arm. Other key points can of course be used.

A reference point RP is predetermined on the console 1 from which all distances are calculated. The reference point RP on the console 1 is at a center point of the console 1.

We will now describe the steps in block 110.

Let's assume that a user touch is detected on the console 1.

In block 110, is performed a step 111 of determining, based on the image, the distance dist12 between the key point K10 on the left wrist and the reference point RP on the console 1. A similar step 112 is performed for the other forearm, i.e. determining distance dist11 between the key point K9 on the right wrist and the reference point RP on the console 1. For clarity reason, only dist11 is shown on figure 2.

Two steps 113, 114 are carried out to determine, based on the image, the distance dist22, respectively dist21, between the reference point RP on the console 1 and the intersection point IP of the left forearm direction (or ray RF), respectively of the right forearm direction (or ray) of the person, with a console reference line RL. The reference line RL on the console 1 is a horizontal line aligned with one side of the console. The forearm direction (or ray RF) extends from key point K7 to key point K9 (left side of the person).

In step 115, is performed the calculation of the sum L2 of the distances L2=dist12 + dist22.

In step 116, is performed the calculation of the sum L1 of the distances L1=dist11 + dist21.

In step 117, is performed the calculation of the minimum of L1 and L2 which minimum is equal to min(L1, L2) to determine the person (driver D or passenger P) who is the closest to the console 1.

In step 118, value min(L1+L2) is compared with a threshold TS.

If value min(L1+L2) is superior to threshold TS, then it is concluded that neither the driver D nor the passenger P is using the console 1 (step 119).

If value min(L1+L2) is inferior to threshold TS, then is performed a step 120 of determining if the person who is the closest to the console 1 is the driver D or the passage P.

If in step 120, it is concluded that the person is the driver D then safety features are activated on the console 1 (step 121).

Safety features may involve disabling certain applications, such as games, while the vehicle is in motion. In another example, only voice commands, without the use of a keyboard, can be utilized while the vehicle is in motion. Safety features may involve disabling the console for a brief period after a few touches on the console while the vehicle is in motion.

If the detected person is not the driver, no safety feature is activated (step 122).

For step 120 to determine if the person closest to the console is the driver D or the passage P, it is used steps 123 and 124 of detecting a bounding box 130 at least for the driver D.

In step 123, for instance, the driver D is set on the left of the image, if the driver is on the right, then the image is flipped to get the driver D on the left side. The bounding box of each person is determined by encompassing the key points of the person. If the area of the bounding box is above a certain threshold (to filter out small insignificant bounding boxes) and the bounding box is on the left side of the image, then it is determined to be the bounding box of the driver D and the other bounding box is the one of the passenger P. Of course, step 123 may be configured differently.

If the key points are in the bounding box of the driver, then provide an information that the driver is attempting to use the console (step 124).

In the situation of figure 2, no one is using the console 1.

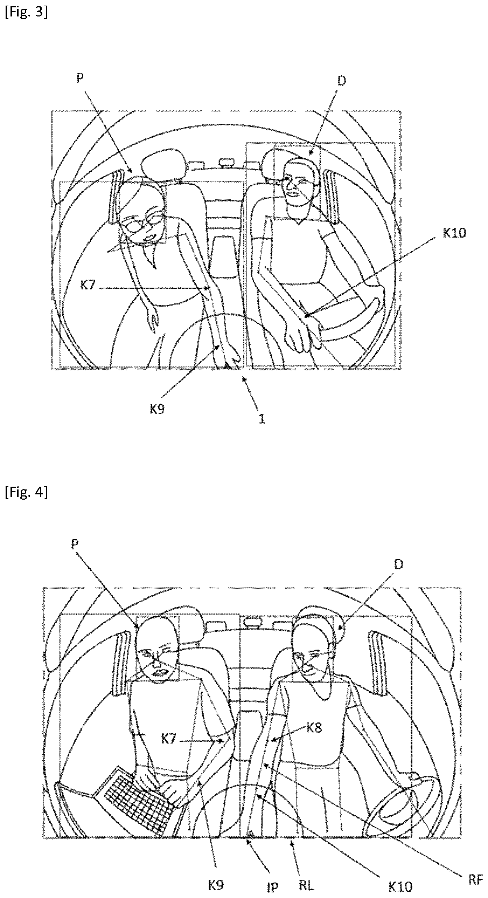

In the situation of figure 3, the passenger P is using the console 1.

In the situation of figure 4, the driver D using the console 1 where min(L1+L2) is inferior to the threshold TS, and the bounding box 130 is confirmed to belong to the driver D.

The invention involves using a camera 2 capable of distinguishing whether the driver or the passenger is utilizing the console. If the driver is detected as attempting to use the console, then a console safety feature is activated. On the contrary, if the passenger (not driving) is detected, then no safety feature is activated. For the driver, for instance, applications are locked during driving and become accessible when the car is stationary. The invention enables to differentiate between the two persons (driver and passage). Overall safety is thereby enhanced.

## Claims

1. Method for detecting a person using a console (1), in particular for safety features activation in a vehicle, the method comprising the following steps:
• Providing a camera (2) configured to take images of the person, in particular the camera is an Interior Monitoring System (IMS) camera of a vehicle,
• Detecting an interaction, in particular a touch, of a person on the console (1),
• Detecting key points on the images, said key points (Kn) being located on the person's body,
• Using key points (Kn) detected on the images to determine if the person is using the console by determining the distance between the key point (Kn) and a reference point (RP) on the console (1).

2. Method according to the preceding claim, wherein the camera (2) is configured to capture both a passenger (P) and a driver (D) in its field of view, and key points (Kn) are detected for both the driver and the passenger.

3. Method according to any of the preceding claims, wherein key points (Kn) are located at least on the arm and/or the shoulder of the person, in particular key points are located on the elbow and wrist of each person, for right arm and left arm.

4. Method according to the preceding claim, wherein the method comprises the step of determining the distance (distil, dist 12) between the key point on the wrist and the reference point on the console.

5. Method according to any of the preceding claims, wherein detecting an interaction, in particular a touch, of a person on the console (1) involves a touch detection on the console.

6. Method according to any of the preceding claims, wherein the method comprises the following steps:
- Determining, based on the image, the distance (dist12; distil) between a key point of a person, particularly a key point on the wrist, and the reference point (RP) on the console,
- Determining, based on the image, the distance (dist22; dist21) between the reference point (RP) on the console and the intersection point of a forearm direction of the person with a console reference line.

7. Method according to any of the preceding claims, wherein the method comprises the steps of calculating the sum of said distances L2=dist12 + dist22 (or L1=dist11+dist21), and determining the minimum of L1 and L2 which is equal to min(L1, L2).

8. Method according to the preceding claim, wherein the method comprises the step of, based on the parameter min(L1+L2) related to each person, determining the person who is the closest to the console (1).

9. Method according to the preceding claim, wherein, if the parameter min(L1+L2) is inferior to a predetermined threshold (TS), determine if the person associated to this parameter is the driver on not.

10. Method according to the preceding claim, wherein, if the detected person is the driver), activate at least on safety feature for the console.

11. Method according to the two preceding claims, wherein, if the detected person is not the driver, do not activate at least on safety feature for the console (1).

12. Method according to any of the preceding claims, wherein the method comprises the step of detecting a bounding box (130) at least for the driver.

13. Method according to the preceding claim, wherein, if the key point is in the bounding box (130) of the driver, then provide an information that the driver is attempting to use the console.

14. Detection device (20) for detecting a person using a console (1), in particular for safety features activation in a vehicle, the detection device is configured to perform the detection method according to claims 1 to 13, wherein the detection device comprises a camera (2) and a processing unit (21), in particular an onboard computer, connected to the camera.

15. A vehicle comprising a detection device according to claim 14.
